# EUROPÄISCHE PATENTANMELDUNG

(11) **EP 2 031 092 A2**
(43) Veröffentlichungstag der Anmeldung: **04.03.2009**
(21) Anmeldenummer: 08015007.1
(22) Anmeldetag: 26.08.2008
(51) Int. Cl.: C23F 11/14, C23F 11/16, C07C 323/59, C09K 8/54, C11D 1/10

(54) **Amphotere Tenside enthaltende Korrosionsinhibitoren**

(30) Priorität: 31.08.2007 DE 102007041217
(71) Anmelder: Clariant International Ltd., 4132 Muttenz (CH)
(72) Erfinder: Leinweber, Dirk, 65779 Kelkheim (DE); Feustel, Michael, 55278 Köngernheim (DE)
(74) Vertreter: Mikulecky, Klaus

(57) **Zusammenfassung**

Gegenstand der Erfindung ist die Verwendung von Zusammensetzungen enthaltend Metallsalze von Verbindungen der Formel (1) 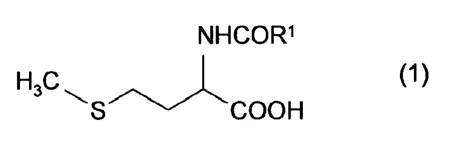 worin R¹ C₁- bis C₂₉-Alkyl, C₂- bis C₂₉-Alkenyl, C₆- bis C₃₀-Aryl oder C₇- bis C₃₀-Alkylaryl bedeutet, und amphotere Tenside als Korrosionsinhibitoren.

## Beschreibung

Die vorliegende Erfindung betrifft ein Verfahren zur Korrosionsinhibierung an und in Einrichtungen zur Förderung und Transport von Kohlenwasserstoffen in der Erdölförderung und -verarbeitung, indem man dem korrosiven System ein Metallsalz von N-Acylmethionin und ein amphoteres Tensid zusetzt.

In technischen Prozessen, bei denen Metalle mit Wasser oder auch mit Öl-Wasser-Zweiphasensystemen in Kontakt kommen, besteht die Gefahr der Korrosion. Diese ist besonders ausgeprägt, wenn die wässrige Phase wie bei Erdölgewinnungs- und Verarbeitungsprozessen stark salzhaltig oder durch gelöste Sauergase, wie Kohlendioxid bzw. Schwefelwasserstoff, azid ist. Daher sind die Ausbeutung einer Lagerstätte und die Verarbeitung von Erdöl ohne spezielle Additive zum Schutz der eingesetzten Ausrüstungen nicht möglich.

Geeignete Korrosionsschutzmittel für die Erdölförderung und -verarbeitung sind zwar schon seit langem bekannt, jedoch aus Gründen des Umweltschutzes für Offshore-Anwendungen zukünftig inakzeptabel.

Als typische Korrosionsinhibitoren des Standes der Technik besitzen Amide, Amidoamine bzw. Imidazoline von Fettsäuren und Polyaminen eine äußerst gute Öllöslichkeit und sind somit in der korrosiven Wasserphase aufgrund schlechter Verteilungsgleichgewichte (Partitioning) nur in geringer Konzentration vorhanden. Demgemäß müssen diese Produkte trotz ihrer schlechten biologischen Abbaubarkeit in hoher Dosierung eingesetzt werden.

Quartäre Alkylammoniumverbindungen (Quats) stellen alternative Korrosionsschutzmittel des Standes der Technik dar, die neben den korrosionsinhibierenden auch biostatische Eigenschaften besitzen können. Trotz einer verbesserten Wasserlöslichkeit zeigen die Quats, zum Beispiel im Vergleich zu den Imidazolinen, eine deutlich reduzierte Filmpersistenz und führen daher ebenfalls nur in höherer Dosierung zu einem effektiven Korrosionsschutz. Die starke Algentoxizität und die mäßige biologische Abbaubarkeit beschränken den Einsatz von Quats immer mehr auf ökologisch unsensible Anwendungsgebiete.

US-4 240 823 beschreibt N-Acyl-Methionin Derivate, die als Wachstumsregulatoren im Bereich des Pflanzenschutzes eingesetzt werden.

In JP-A-8 337 562 und JP-A-8 337 563 werden N-Acyl-Aminosäuren und ihre Alkalimetallsalze beschrieben, die auch als Korrosionsinhibitoren eingesetzt werden können.

In JP-A-49 026 145 werden N-Acyl-Aminosäure Alkalimetallsalze beschrieben, die als Korrosionsinhibitoren eingesetzt werden können. Als Beispiel wird N-Lauroylglycin Natriumsalz genannt.

In DE-10 2006 002 784 werden N-Acyl-Methionin-Ammoniumsalze offenbart, die eine ausgezeichnete Wirkung als Korrosionsinhibitoren aufweisen, sowie eine gute biologische Abbaubarkeit und verminderte Toxizität zeigen. Nachteilig an diesen Verbindungen ist allerdings deren aufwändige Herstellung und die damit verbundenen relativ hohen Herstellkosten.

Aufgabe der vorliegenden Erfindung war es, neue Korrosionsinhibitoren zu finden, die bei verbessertem Korrosionsschutz neben einer guten Wasserlöslichkeit auch eine verbesserte biologische Abbaubarkeit und niedrigere Toxizität im Vergleich zu den Korrosionsinhibitoren des Standes der Technik bieten. Weiterhin sollen die neuen Korrosionsinhibitoren zu einem ökonomisch akzeptablen Preis herstellbar sein.

Es wurde nun überraschenderweise gefunden, dass N-Acyl-Methionin-Metallsalze in Mischung mit amphotären Tensiden eine ausgezeichnete Wirkung als Korrosionsinhibitoren aufweisen, sowie eine gute biologische Abbaubarkeit und verminderte Toxizität zeigen. Aufgrund einer synergistischen Wirkung zwischen N-Acyl-Methionin-Metallsalz und nichtionischem Tensid können die Dosierraten im Vergleich zum Stand der Technik deutlich reduziert werden, womit die neuen Korrosionsinhibitor-Mischungen auch ökonomisch vorteilhaft sind.

Gegenstand der Erfindung ist somit die Verwendung von Zusammensetzungen, enthaltend Metallsalze von Verbindungen der Formel (1) 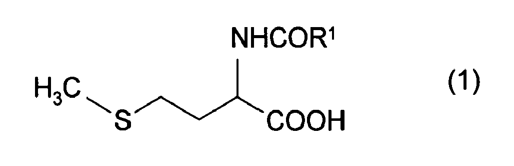 worin R¹ C₁- bis C₂₉-Alkyl, C₂- bis C₂₉-Alkenyl, C₆- bis C₃₀-Aryl oder C₇- bis C₃₀-Alkylaryl bedeutet, und amphotere Tenside als Korrosionsinhibitoren.

Ein weiterer Gegenstand der Erfindung ist ein Verfahren zur Inhibierung von Korrosion an Metalloberflächen, insbesondere von eisenhaltigen Metallen, indem einem korrosiven System, welches mit den Metalloberflächen in Kontakt steht, mindestens ein Metallsalz von Verbindungen der Formel (1) und ein amphoteres Tensid zugesetzt wird.

Ein weiterer Gegenstand der Erfindung sind Zusammensetzungen, enthaltend mindestens ein Metallsalz einer Verbindung der Formel (1) und mindestens ein amphoteres Tensid.

Ein weiterer Gegenstand der Erfindung ist die Verwendung von Metallsalzen von Verbindungen der Formel (1) zusammen mit amphoteren Tensiden als Metallbearbeitungsmittel. Hierbei bieten die erfindungsgemäßen Zusammensetzungen auch bei starker mechanischer Belastung, wie beim Schleifen, Schneiden und Bohren von Metallwerkstücken einen sehr guten Korrosionsschutz.

Korrosive Systeme im Sinne dieser Erfindung sind bevorzugt flüssig/flüssig- bzw. flüssig/gasförmig-Mehrphasensysteme, bestehend aus Wasser und Kohlenwasserstoffen, die in freier und/oder gelöster Form korrosive Bestandteile, wie Salze und Säuren, enthalten. Die korrosiven Bestandteile können auch gasförmig sein, wie etwa Schwefelwasserstoff und Kohlendioxid.

Kohlenwasserstoffe im Sinne dieser Erfindung sind organische Verbindungen, die Bestandteile des Erdöls/Erdgases sind, und deren Folgeprodukte. Kohlenwasserstoffe im Sinne dieser Erfindung sind auch leichtflüchtige Kohlenwasserstoffe, wie beispielsweise Methan, Ethan, Propan, Butan. Für die Zwecke dieser Erfindung zählen dazu auch die weiteren gasförmigen Bestandteile des Erdöls/Erdgases, wie etwa Schwefelwasserstoff und Kohlendioxid.

Bevorzugte Tenside sind solche, die in einer Konzentration von 0,5 Gew.-% in Wasser eine Oberflächenspannung dieser wässrigen Lösung von höchstens 55 mN/m, besonders bevorzugt von höchstens 50 mN/m und speziell von höchstens 45 mN/m bewirken.

In einer weiteren bevorzugten Ausführungsform der Erfindung steht R¹ für C₃- bis C₂₃-Alkyl, C₃- bis C₂₃-Alkenyl, C₆- bis C₂₄-Aryl- oder C₇- bis C₂₅-Alkylaryl, insbesondere für eine Alkyl- oder Alkenylgruppe mit 7 bis 17 Kohlenstoffatomen.

Geeignete amphotere Tenside werden in US 5106609, US 6169060 und WO 9949008 ausführlich beschrieben. Besonders geeignete amphotere (zwitterionische) Tenside entsprechen den Formeln (2) bis (14): 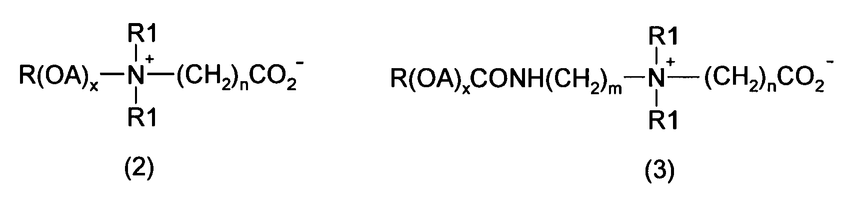 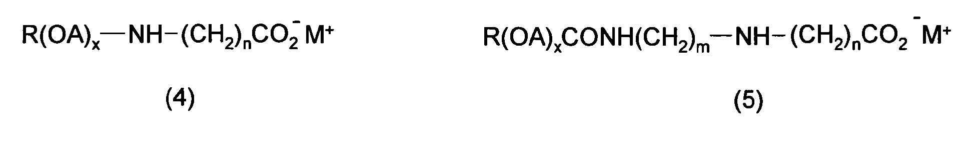 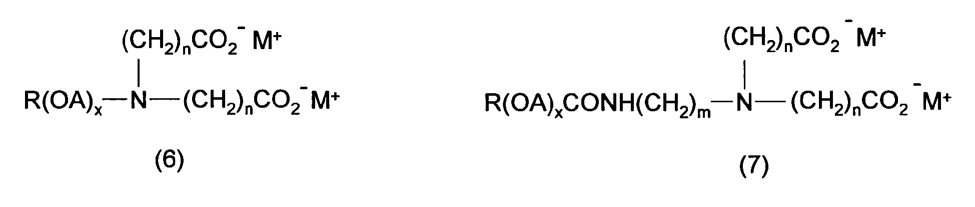 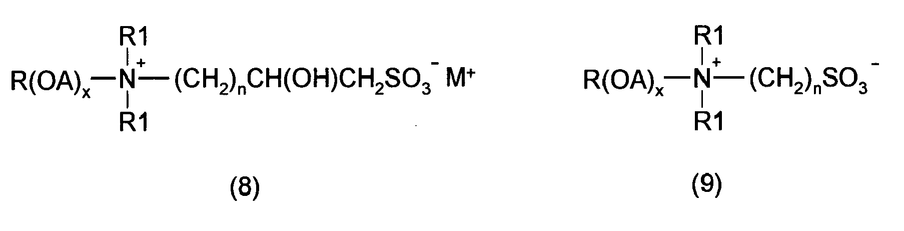 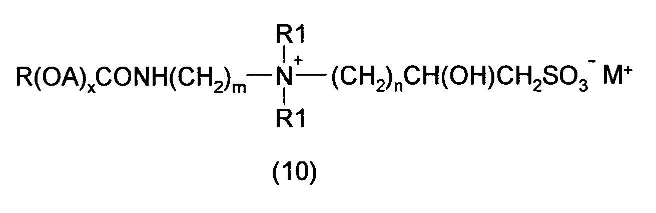 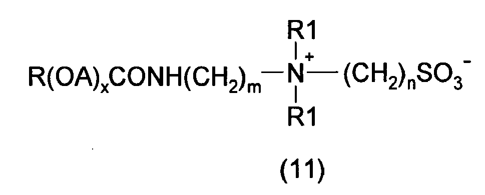 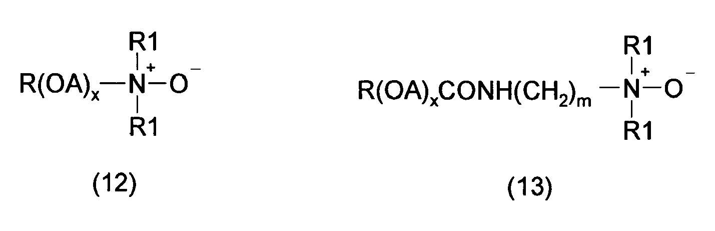 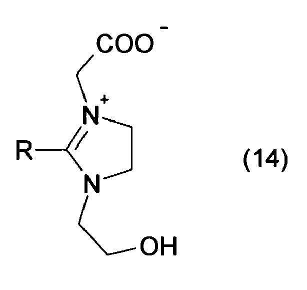 worin R eine Alkyl-, Alkenyl-, Hydroxyalkyl- oder Alkylarylgruppe mit 4 bis 22 Kohlenstoffatomen, jeder Rest R1 unabhängig voneinander eine Alkyl- oder Hydroxyalkylgruppe mit 1 bis 3 Kohlenstoffatomen bedeutet oder zwei R1-Gruppen über eine -O- oder -NH-Gruppe unter Ringbildung miteinander verbunden sind, A eine Alkylengruppe mit 2 bis 4 Kohlenstoffatomen oder Mischungen hiervon, und x eine Zahl von 0 bis 10 bedeuten. M steht für H, Alkalimetall, Erdalkalimetall, Ammonium oder Alkanolammonium sowie m und n unabhängig voneinander für Zahlen von 1 bis 4.

Als Betaine sind besonders bevorzugt Verbindungen der Formeln (2) oder (3) mit R = C₈-C₂₂-Alkyl oder -Alkenyl, R1 = CH₃ oder Hydroxyethyl oder Hydroxypropyl, n = 1 oder 3, m = 3 und x = 0. Beispiele sind C_{12/14}-Alkyldimethylcarboxybetain, C_{12/14}-Alkylamidopropyl-N,N-dimethyl-N-carboxylmethylbetain,
Stearyldimethylcarboxybetain, Behenyldimethylcarboxybetain, Oleyldi(hydroxyethyl)carboxybetain oder Oleyldimethyl-3-carboxypropylbetain.

Besonders bevorzugte Verbindungen der Formeln (4) bis (7) sind Amphoacetate sowie Amphopropionate mit R = C₈-C₁₈-Alkyl oder -Alkenyl, x = 0, m = 2, n = 1 oder 3 sowie M = H, Na, K, Alkanolammonium. Beispiele sind Natrium Lauroamphoacetat, Natrium Lauroamphodiacetat, Natrium Lauroamphopropionat, Natrium Lauroamphodipropionat, Octylaminopropionsäure, Octyliminodipropionsäure, Kokosaminopropionsäure, Kokosiminodipropionsäure,

Sulfobetaine der Formeln (8) bis (11) sind besonders bevorzugt mit R = C₈-C₁₈-Alkyl oder -Alkenyl, R1 = CH₃ oder hydroxyethyl oder hydroxypropyl, n = 1, 3 oder 4, x = 0, m = 2 sowie M = H, Na, K, Alkanolammonium. Beispiele sind Kokosdimethylsulfopropylbetain, Octyldimethyldi(hydroxyethyl)sulfopropylbetain, Stearyldimethylsulfobutylbetain.

Als Aminoxide der Formeln (12) und (13) sind besonders bevorzugt C₈-C₁₈ Alkyldimethylaminoxide und C₈-C₁₈-Alkoxyethyl-dihydroxyethylaminoxide wie Kokosdimethylaminoxid, Stearyldimethylaminoxid, Lauryldi(hydroxylethyl)aminoxid, Myristyldimethylaminoxid.

Alkyl- oder Alkenylimidazoliniumbetaine der Formel (14) sind besonders bevorzugt mit R = C₇-C₁₇-Alkyl oder -Alkenyl. Beispiele sind Kokosfettsäure(hydroxyethylimidazolin) carboxymethylbetain, Ölsäure(hydroxyethylimidazolin)carboxymethylbetain, Tallölfettsäure(hydroxyethylimidazolin)carboxymethylbetain.

Die erfindungsgemäßen Zusammensetzungen können alleine oder in Kombination mit anderen bekannten Korrosionsinhibitoren eingesetzt werden. Im Allgemeinen wird man so viel der erfindungsgemäßen Zusammensetzung einsetzen, dass man unter den gegebenen Bedingungen einen ausreichenden Korrosionsschutz erhält.

Bevorzugte Einsatzkonzentrationen der erfindungsgemäßen Zusammensetzungen sind 5 bis 5000 ppm, bevorzugt 10 bis 1000, insbesondere 15 bis 150 ppm. Das Mischungsverhältnis zwischen Metallsalz der Verbindung 1 und amphoterem Tensid beträgt vorzugsweise 1:9 bis 9:1, insbesondere 3:7 bis 7:3.

Besonders geeignet als Korrosionsinhibitoren sind auch Mischungen der erfindungsgemäßen Zusammensetzungen mit anderen Korrosionsinhibitoren des Standes der Technik.

### Beispiele:

Allgemeine Vorschrift für die Herstellung von N-Acyl-Methionin-Metallsalzen

In einer Standard-Rührapparatur werden 1 mol DL-Methionin in 300 mL Wasser mit 50 %iger wässriger Metallhydroxidlösung neutralisiert. Zu der gebildeten Lösung werden bei 15-20 °C 1 mol Carbonsäurechlorid zudosiert; wobei der pH-Wert durch parallele Dosierung von 15 %iger wässriger Metallhydroxidlösung bei 10-13 gehalten wird. Die Reaktionslösung wird 3 h bei Raumtemperatur nachgerührt. Das erhaltene N-Acyl-Methionin-Metallsalz wird mittels Alkalizahl (AZ) und Wirkstoffgehalt charakterisiert. Prozentangaben sind Gewichtsprozente bezogen auf das Gewicht des erfindungsgemäßen Salzes.
Beispiel 1 N-Kokoyl-DL-Methionin-Natriumsalz (Vergleich)
   Aus Kokosfettsäurechlorid, DL-Methionin und Natriumhydroxid wurde N-Kokoyl-DL-Methionin-Natriumsalz mit einem Wirkstoffgehalt von 40 % und einer AZ = 65 mg KOH/g erhalten.
Beispiel 2 N-Oleoyl-DL-Methionin-Kaliumsalz (Vergleich)
   Aus Ölsäurechlorid, DL-Methionin und Kaliumhydroxid wurde N-Oleyl-DL-Methionin-Kaliumsalz mit einem Wirkstoffgehalt von 40% und einer AZ = 56 mg KOH/g erhalten.
Beispiel 3 Korrosionsinhibitor-Mischung 1
   40 g N-Kokoyl-DL-Methionin-Natriumsalz aus Beispiel 1 wurden mit 40 g einer 20 %igen wässrigen Lösung von Behenyldimethylcarboxybetain und 20 g Butylglykol vermischt.
Beispiel 4 Korrosionsinhibitor-Mischung 2
   40 g N-Kokoyl-DL-Methionin-Natriumsalz aus Beispiel 1 wurden mit 8 g Octylaminopropionsäure, 20 g Butylglykol und 32 g Wasser vermischt.
Beispiel 5 Korrosionsinhibitor-Mischung 3
   40 g N-Kokoyl-DL-Methionin-Natriumsalz aus Beispiel 1 wurden mit 40 g einer 20 %igen wässrigen Lösung von Kokosdimethylsulfopropylbetain und 20 g Butylglykol vermischt.
Beispiel 6 Korrosionsinhibitor-Mischung 4
   40 g N-Kokoyl-DL-Methionin-Natriumsalz aus Beispiel 1 wurden mit 40 g einer 20 %igen wässrigen Lösung von Lauryldi(hydroxylethyl)aminoxid und 20 g Butylglykol vermischt.
Beispiel 7 Korrosionsinhibitor-Mischung 5
   40 g N-Kokoyl-DL-Methionin-Natriumsalz aus Beispiel 1 wurden mit 8 g Tallölfettsäure(hydroxyethylimidazolin)carboxymethylbetain, 20 g Butylglykol und 32 g Wasser vermischt.
Beispiel 8 Korrosionsinhibitor-Mischung 6
   40 g N-Oleoyl-DL-Methionin-Kaliumsalz aus Beispiel 2 wurden mit 40 g einer 20 %igen wässrigen Lösung von Behenyldimethylcarboxybetain und 20 g Butylglykol vermischt.
Beispiel 9 Korrosionsinhibitor-Mischung 7
   40 g N-Oleoyl-DL-Methionin-Kaliumsalz aus Beispiel 2 wurden mit 8 g Octylaminopropionsäure, 20 g Butylglykol und 32 g Wasser vermischt.
Beispiel 10 Korrosionsinhibitor-Mischung 8
   40 g N-Oleoyl-DL-Methionin-Kaliumsalz aus Beispiel 2 wurden mit 40 g einer 20 %igen wässrigen Lösung von Kokosdimethylsulfopropylbetain und 20 g Butylglykol vermischt.
Beispiel 11 Korrosionsinhibitor-Mischung 9
   40 g N-Oleoyl-DL-Methionin-Kaliumsalz aus Beispiel 2 wurden mit 40 g einer 20 %igen wässrigen Lösung von Lauryldi(hydroxylethyl)aminoxid und 20 g Butylglykol vermischt.
Beispiel 12 Korrosionsinhibitor-Mischung 10
   40 g N-Oleoyl-DL-Methionin-Kaliumsalz aus Beispiel 2 wurden mit 8 g Tallölfettsäure(hydroxyethylimidazolin)carboxymethylbetain, 20 g Butylglykol und 32 g Wasser vermischt.
Beispiel 13 Korrosionsinhibitor-Mischung 11
   55 g N-Kokoyl-DL-Methionin-Natriumsalz aus Beispiel 1 wurden mit 2 g Tallölfettsäure(hydroxyethylimidazolin)carboxymethylbetain, 20 g Butylglykol und 23 g Wasser vermischt.

Wirksamkeit der erfindungsgemäßen Verbindungen als Korrosionsinhibitoren

Die erfindungsgemäßen Verbindungen wurden als Korrosionsinhibitoren im Shell-Wheel-Test geprüft. Coupons aus C-Stahl (DIN 1.1203 mit 15 cm² Oberfläche) wurden in eine Salzwasser/Petroleum-Mischung (9:1,5 %ige NaCl-Lösung mit Essigsäure auf pH 3,5 gestellt) eingetaucht und bei einer Umlaufgeschwindigkeit von 40 rpm bei 70 °C 24 Stunden diesem Medium ausgesetzt. Die Dosierung des Inhibitors betrug 50 ppm einer 24 % Lösung des Inhibitors. Die Schutzwerte wurden aus der Massenabnahme der Coupons, bezogen auf einen Blindwert, berechnet.

In den folgenden Tabellen bezeichnet "Vergleich 1" ein handelsübliches Rückstandsamin - Quat auf Basis Dikokosalkyl-dimethylammoniumchlorid, "Vergleich 2" ein handelsübliches Imidazolin-Salz auf Basis Ölsäure-Diethylentriamin und "Vergleich 3" ein Beispiel aus DE-10 2006 002 784 (N-Kokoyl-DL-Methionin-Morpholiniumsalz, Korrosionsinhibitor des Standes der Technik).

**Tabelle 1: (Shell-Wheel-Test)**

| Beispiel | Korrosionsinhibitor | ø Schutz % |
|---|---|---|
| Vergleich 1 | Standard-Quat | 28 |
| Vergleich 2 | Ölsäure-DETA-imidazolin | 70 |
| Vergleich 3 | N-Kokoyl-DL-Methionin-Morpholiniumsalz | 75 |
| Vergleich 4 | aus Beispiel 1 | 67 |
| Vergleich 5 | aus Beispiel 2 | 69 |
| 14 | aus Beispiel 3 | 86 |
| 15 | aus Beispiel 4 | 80 |
| 16 | aus Beispiel 5 | 89 |
| 17 | aus Beispiel 6 | 89 |
| 18 | aus Beispiel 7 | 93 |
| 19 | aus Beispiel 8 | 86 |
| 20 | aus Beispiel 9 | 81 |
| 21 | aus Beispiel 10 | 90 |
| 22 | aus Beispiel 11 | 89 |
| 23 | aus Beispiel 12 | 94 |
| 24 | aus Beispiel 13 | 82 |

Wie aus Tabelle 1 zu erkennen ist, weisen die erfindungsgemäßen Zusammensetzungen sehr gute Korrosionsschutzeigenschaften bei sehr niedriger Dosierung auf und übertreffen die Wirksamkeit der Inhibitoren des Standes der Technik zum Teil sogar deutlich.

Beispiel 24 zeigt im Vergleich zu Beispiel 18, dass der synergistische Effekt des N-Acylmethionin-Metallsalzes in Kombination mit einem amphoteren Tensid bei einem Verhältnis von > 9:1 zwar abnimmt, aber immer noch vorhanden ist.

**Tabelle 2: Biologische Abbaubarkeit (OECD 306) und Toxizität (EC₅₀ Skeletonema Costatum) ausgewählter erfindungsgemäßer Korrosionsinhibitoren**

| Beispiel | Korrosionsinhibitor | Biologische Abbaubarkeit [%] | Toxizität EC₅₀ [mg/L] |
|---|---|---|---|
| Vergleich 1 | Standard-Quat | 15,2 | 0,57 |
| Vergleich 2 | Ölsäure-DETA-imidazolin | 6,8 | 0,33 |
| 25 | aus Beispiel 3 | 62,4 | 58,1 |
| 26 | aus Beispiel 4 | 81,0 | 71,9 |
| 27 | aus Beispiel 7 | 42,5 | 30,1 |
| 28 | aus Beispiel 9 | 77,5 | 68,5 |

Wie aus Tabelle 2 klar ersichtlich ist, zeigen die erfindungsgemäßen Verbindungen eine bessere biologische Abbaubarkeit und niedrigere Toxizität als die Vergleichsbeispiele aus dem Stand der Technik.

## Patentansprüche

1. Verwendung von Zusammensetzungen enthaltend Metallsalze von Verbindungen der Formel (1) 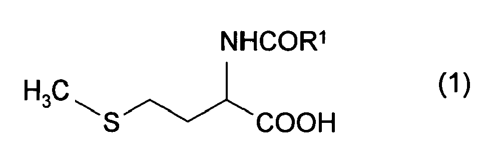 worin R¹ C₁- bis C₂₉-Alkyl, C₂- bis C₂₉-Alkenyl, C₆- bis C₃₀-Aryl oder C₇- bis C₃₀-Alkylaryl bedeutet, und amphotere Tenside als Korrosionsinhibitoren.

2. Verwendung nach Anspruch 1, wobei R¹ für eine Alkyl- oder Alkenylgruppe von 7 bis 17 Kohlenstoffatomen steht.

3. Verwendung nach Anspruch 1 und/oder 2, wobei das Metallsalz ein Alkalimetallsalz ist.

4. Verwendung nach einem oder mehreren der Ansprüche 1 bis 3, wobei das amphotere Tensid aus Verbindungen der Formeln (2) bis (14) 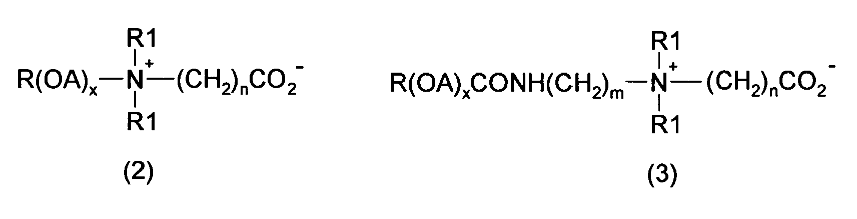 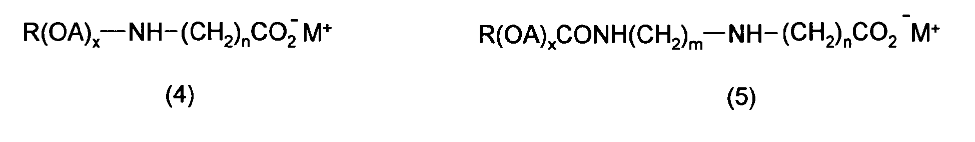 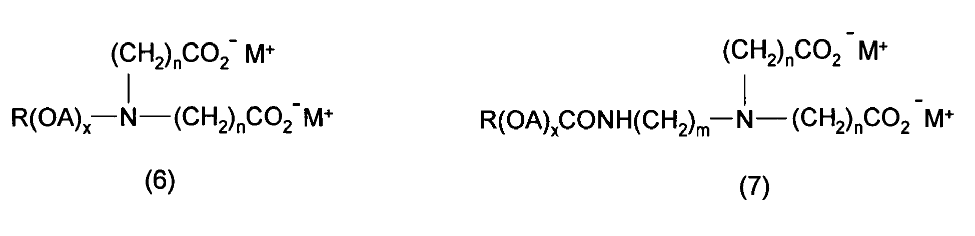 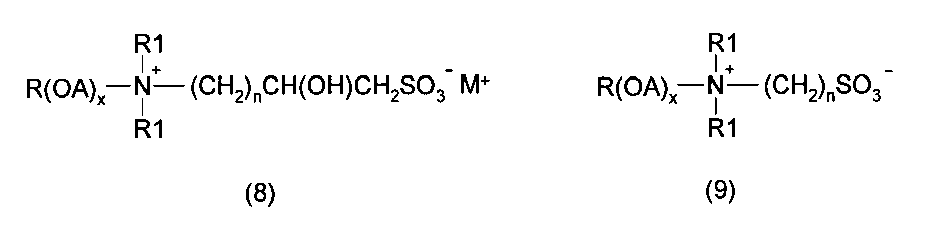 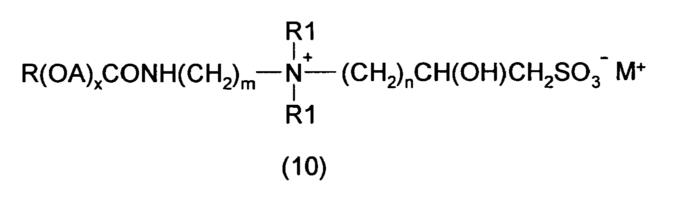 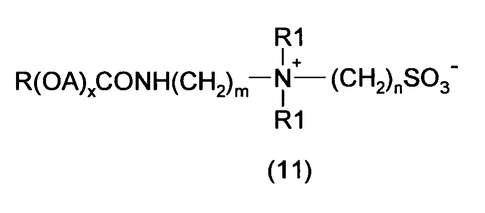 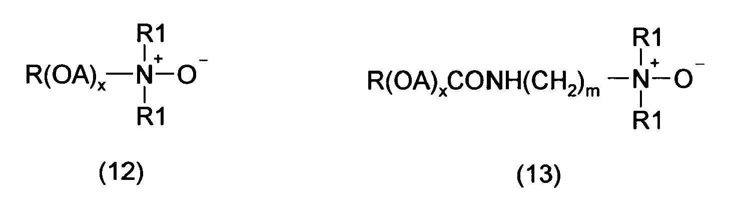 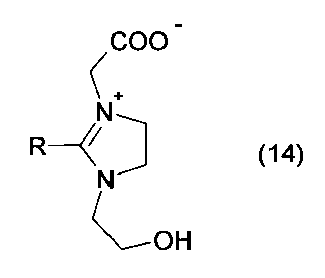 ausgewählt ist, worin
R C₄- bis C₂₂-Alkyl, C₄- bis C₂₂-Alkenyl oder C₄- bis C₂₂-Alkylaryl
R1 C₁- bis C₃-Alkyl, C₁- bis C₃-Hydroxyalkyl
R3 Methyl oder -A-(OA)ₙ-OH
R4 -A-(OA)ₙ-OH
A C₂- bis C₄-Alkylengruppe
m eine Zahl von 1 bis 4
n eine Zahl von 1 bis 4
x eine Zahl von 0 bis 10
M H, Alkalimetall, Erdalkalimetall, Ammonium, Alkanolammonium bedeuten.

5. Verwendung nach einem oder mehreren der Ansprüche 1 bis 4, worin die Gesamtmenge an Metallsalz und amphoterem Tensid zwischen 5 und 5000 ppm liegt.

6. Verwendung nach einem oder mehreren der Ansprüche 1 bis 5, worin das Gewichtsverhältnis zwischen Metallsalz und amphoterem Tensid zwischen 1:9 und 9:1 liegt.

7. Verwendung nach einem oder mehreren der Ansprüche 1 bis 6 als Korrosionsinhibitoren an und in Einrichtungen zur Förderung und Transport von Kohlenwasserstoffen in der Erdölförderung und -verarbeitung.

8. Verwendung nach einem oder mehreren der Ansprüche 1 bis 6 als Korrosionsinhibitoren in Metallbearbeitungshilfsmitteln.

9. Zusammensetzungen, enthaltend mindestens ein Metallsalz einer Verbindung der Formel (1) 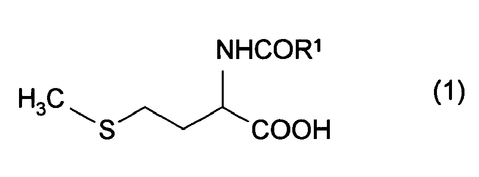 worin R¹ C₁- bis C₂₉-Alkyl, C₂- bis C₂₉-Alkenyl, C₆- bis C₃₀-Aryl oder C₇- bis C₃₀-Alkylaryl bedeutet, sowie mindestens ein amphoteres Tensid.

10. Zusammensetzungen nach Anspruch 9, worin das Gewichtsverhältnis von Metallsalz zu amphoterem Tensid zwischen 9:1 und 1:9 liegt.
